(19) Europäisches Patentamt / European Patent Office / Office européen des brevets

(11) **EP 2 761 112 B1**

(12) **EUROPÄISCHE PATENTSCHRIFT**

(45) Veröffentlichungstag und Bekanntmachung des Hinweises auf die Patenterteilung:
**08.11.2017   Patentblatt 2017/45**

(21) Anmeldenummer: **12769322.4**

(22) Anmeldetag: **21.09.2012**

(51) Int Cl.:
**B29L 31/00** *(2006.01)*      **B29C 67/00** *(2017.01)*
**B29C 70/64** *(2006.01)*      **E04F 15/10** *(2006.01)*
**E04F 15/16** *(2006.01)*

(86) Internationale Anmeldenummer:
**PCT/EP2012/003960**

(87) Internationale Veröffentlichungsnummer:
**WO 2013/045062 (04.04.2013 Gazette 2013/14)**

(54) **BODENBELAG**

FLOOR COVERING

REVÊTEMENT DE SOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2011   DE 102011114597**

(43) Veröffentlichungstag der Anmeldung:
**06.08.2014   Patentblatt 2014/32**

(73) Patentinhaber: **Nora Systems GmbH**
**69469 Weinheim (DE)**

(72) Erfinder:
• **KRÖGER, Mario**
  **766416 Bruchsal (DE)**
• **ALBRECHT, Andreas**
  **68161 Mannheim (DE)**
• **RIESCHER, Dieter**
  **69518 Absteinach (DE)**
• **MÜLLER, Stefan**
  **64658 Fürth (DE)**

(74) Vertreter: **Reiser & Partner**
**Patentanwälte mbB**
**Weinheimer Straße 102**
**69469 Weinheim (DE)**

(56) Entgegenhaltungen:
**EP-A2- 1 045 084      EP-A2- 1 884 607**
**DE-A1- 10 316 886      DE-B- 1 198 535**

**Beschreibung**

Die Erfindung betrifft einen Bodenbelag, umfassend ein bahn- oder plattenförmiges Grundmaterial aus elastomerem Werkstoff, wobei das Grundmaterial mit mineralischen Schmuckpartikeln versehen ist.

Aus der DE 103 16 886 A1 ist ein elastischer Bodenbelag aus thermoplastischen Materialien bekannt, in dessen Deckschicht zur Erhöhung der Abriebfestigkeit Korund eingearbeitet ist. Korund ist ein hartes oxidisches Mineral, welches insbesondere zur Verwendung als Schleifmittel bekannt ist. Zum Einarbeiten des Korunds wird aus dem Material zunächst eine flächige, den Bodenbelag bildende Schicht erzeugt und das in Form von Partikeln vorliegende Korund wird auf die Oberfläche aufgestreut. In einer Nachbehandlung werden die Partikel fest mit der Schicht verbunden. Dazu kann die Schicht beispielsweise einem Kalander zugeführt werden.

Bei der Herstellung von Bodenbelägen hat sich jedoch herausgestellt, dass partikelförmiges Korund in die Matrix des Bodenbelags einsinkt, so dass nur ein geringer Teil der Partikel an der Oberfläche der Schicht verbleibt. Dadurch ist eine große Auftragsmenge erforderlich, um mit den Partikeln einen ausreichenden Oberflächeneffekt erzielen zu können.

Die EP 1 045 048 A2 beschreibt einen bahnenförmigen Bodenbelag aus vulkanisierten Kautschuk enthaltend eine elastische Gummibahn, deren Oberseite eine Dekorfläche bildet, wobei in die Gummibahn mineralischen Schmuckpartikel in Form von Dekorteilchen aus Korund oder Siliciumcarbid derart eingebettet sind, dass die Dekorteilchen von der Oberseite sichtbar sind.

Die DE 103 16 886 A1 zeigt einen elastischen Bodenbelag, bestehend aus thermoplastischem Kunststoff-Material mit einer dekorativen Deckschicht aus duroplastischem Material.

Die EP 1 884 607 A2 zeigt einen Bodenbelag mit hoher Trittsicherheit, umfassend ein im wesentlichen bahn- oder plattenförmiges Grundmaterial aus einem elastomeren Werkstoff mit einer körnige Partikel aufweisenden, rutschhemmenden Oberfläche. Die körnigen Partikel bestehen aus einem polymeren Material, welches eine Härte aufweist, die deutlich höher ist als die des elastomeren Werkstoffes.

Die DE 1 198 535 beschreibt ein Verfahren zur Oberflächenbehandlung von elastomeren Flächengebilden, bei welchem kristallines Pulver auf die Oberfläche der Flächengebilde aufgebracht wird.

Der Erfindung liegt die Aufgabe zugrunde, einen mit Schmuckpartikel versehenen Bodenbelag derart weiter zu entwickeln, dass bei verringerter Auftragsmenge ein vorteilhafter Oberflächeneffekt erzielbar ist.

Diese Aufgabe wird mit den Merkmalen der Ansprüche 1 und 7 gelöst. Auf vorteilhafte Ausgestaltungen nehmen die Unteransprüche Bezug.

In Untersuchungen hat sich herausgestellt, dass das Einsinkverhalten von Schmuckpartikeln insbesondere von der Dichte der Partikel abhängt. Zwar liegen auch Schmuckpartikel mit einer Dichte von mehr als 3 $kg/dm^3$ nach dem Aufstreuen zunächst auf dem Grundmaterial auf. Die Schmuckpartikel werden aber zu Beginn der Vulkanisation in das Grundmaterial eingedrückt, so dass auf die Schmuckpartikel vorwiegend der hydrostatische Druck wirkt. Dabei hat sich gezeigt, dass Schmuckpartikel mit einer Dichte von mehr als 3 $kg/dm^3$ derart in die Matrix des Grundmaterials einsinken, dass das Grundmaterial während der Vulkanisation die Schmuckpartikel überfließt und diese teilweise oder auch vollständig bedeckt. Die aus dem Stand der Technik bekannten Korundpartikel weisen mit 3,9 $kg/dm^3$ eine hohe Dichte auf, welche etwa 2-mal bis 2,5-mal größer ist als die Dichte des elastomeren Grundmaterials. Schmuckpartikel mit einer Dichte von weniger als 3 $kg/dm^3$ werden zwar auch vollständig in das Grundmaterial eingedrückt, diese sinken anschließend jedoch nicht in das Grundmaterial ein und werden auch nicht, höchstens geringfügig, vom Grundmaterial bedeckt. Überraschenderweise hat sich gezeigt, dass die Einlagerung der Schmuckpartikel mit einer Dichte von weniger als 3 $kg/dm^3$ in das Grundmaterial derart erfolgt, dass in der Draufsicht die Projektion der Partikel, beziehungsweise die äußeren Umrisse der Schmuckpartikel erkennbar sind und dass die Schmuckpartikel zwar formschlüssig in das Grundmaterial eingebunden sind, der in der Draufsicht erkennbare Bereich der Schmuckpartikel aber fast vollständig frei von Grundmaterial ist.

Darüber hinaus weisen Korundpartikel zwar eine kantige strukturierte Oberfläche auf, jedoch haben Korundpartikel eine hohe Sphärizität von nahe 1. Werden diese Schmuckpartikel auf eine plastisch formbare Schicht, beispielsweise einem in Rohform vorliegenden Bodenbelag aufgestreut, so sinken die Schmuckpartikel aufgrund der hohen Dichte und der runden Gestalt in die Matrix der Schicht ein. Dieser Effekt verstärkt sich insbesondere während der Initiierung der Vulkanisation aufgrund einer kurzfristigen Abnahme der Viskosität des elastomeren Materials. Schmuckpartikel mit einer geringen Dichte und einer geringen Sphärizität sinken demgegenüber weniger in die Matrix des Grundmaterials ein und werden auch nicht von dem Grundmaterial bedeckt, so dass ein größerer Teil der Schmuckpartikel an der Oberfläche des Grundmaterials verbleibt und dort optisch und mechanisch oberflächenwirksam ist. Erfindungsgemäß hat sich nun herausgestellt, dass für die mineralischen Schmuckpartikel einer Partikelfraktion (Schüttung) mit einer Partikelbreite ($x_{c\,min}$) zwischen 0,35 mm und 1,4 mm bei einer $Q_3$-Summenverteilung bereits eine $X_{50}$-Sphärizität von nicht mehr als 0,65 zur Erzielung eines Oberflächeneffekts der Schmuckpartikel ausreicht. Die Sphärizität, auch als Rundheit bezeichnet, eines Schmuckpartikels bestimmt sich durch das Verhältnis zwischen dem Flächeninhalt eines Schmuckpartikels und dessen Umfang. Dabei ist der Wert ausgehend von 1 umso geringer, je weiter die Sphärizität oder Rundheit eines Schmuckpartikels von der Kugelform, als ideal runder Körper abweicht. Je kleiner die Sphärizität ist, desto geringer ist die Eindringtiefe der auf die Schicht aufgestreuten Schmuckpartikel. Die Ermittlung der Sphärizität und der Partikelgröße erfolgt vorzugsweise mit optischen Messmethoden. Zur Bestimmung der Partikelgröße wird die Projektionsfläche einzelner Partikel optisch erfasst und deren kleinste Breite $x_{c\,min}$ optisch ermittelt. Gleichzeitig wird die Sphärizität der einzelnen Partikel optisch erfasst.

Die Schmuckpartikel sind mineralischen Ursprungs, wobei die Schmuckpartikel vorzugsweise Granitpartikel und/oder Glimmer umfassen. Mineralische Partikel ermöglichen im Zusammenhang mit einem elastomeren Grundmaterial ein interessantes Farbspiel und eine effektvolle Oberflächenstruktur. Des Weiteren beeinflussen mineralische Schmuckpartikel den Reibwert des Bodenbelags positiv. Insbesondere verbessern mineralische Schmuckpartikel die Trittsicherheit eines elastomeren Bodenbelags.

Granit- und Glimmerpartikel weisen darüber hinaus den Vorteil auf, dass sie insbesondere im Vergleich zu Korundpartikeln vergleichsweise weich sind. Dadurch kann der erfindungsgemäß mit Partikeln versehene Bodenbelag mit herkömmlichen Schneidmaschinen beschnitten werden. In diesem Zusammenhang hat sich herausgestellt, dass es besonders vorteilhaft ist, wenn die Mohshärte der mineralischen Partikel kleiner als 7 ist.

In einer vorteilhaften Ausgestaltung ist der Bedeckungsgrad auf der Oberfläche des Bodenbelags mit Schmuckpartikel größer als 2%, vorzugsweise größer als 5%. Ein Bedeckungsgrad von 2% bedeutet, dass 2% der dem Raum zugewandten Oberfläche des Bodenbelags mit Schmuckpartikeln der erfindungsgemäßen Art bedeckt sind. Es hat sich gezeigt, dass ab einem Bedeckungsgrad von 2% die Schmuckpartikel einen signifikanten optischen und mechanischen Oberflächeneffekt bewirken. Die Bestimmung des Bedeckungsgrades erfolgt durch eine optische Bildanalyse, wobei zunächst die Oberfläche des Bodenbelags eingescannt oder digital fotografiert wird und die so erfasst Oberfläche anschließend mittels einer Software analysiert wird.

Die mittlere Partikelbreite der auf die Oberfläche des Bodenbelags aufgetragenen Schmuckpartikelfraktion kann höchstens 2 mm, vorzugsweise höchstens 1,5 mm betragen. Besonders bevorzugt ist die Verwendung einer Schüttung von Schmuckpartikeln mit einem Partikeldurchmesser von 0,1 mm bis 2 mm. Dadurch werden Schmuckpartikel unterschiedlicher Größe auf das Grundmaterial aufgetragen, so dass sich ein besonders vorteilhafter optischer Effekt und besonders vorteilhafte mechanische Eigenschaften des Bodenbelags ergeben. Der optische Effekt wird durch eine gemischte Schmuckpartikelfraktion bestehend aus Granit- und Glimmerpartikeln nochmals verstärkt.

Das Grundmaterial ist vorzugsweise aus einem Butadien-Monomere enthaltenden Kautschuk gebildet. Zur Herstellung von Bodenbelägen haben sich insbesondere Nitril-Butadien-Kautschuk (NBR), Styrol-Butadien-Kautschuk (SBR), und Naturkautschuk (NR) bewährt. Es ist jedoch auch denkbar, das Grundmaterial aus Ethylen-Propylen-Dien-Kautschuk (EPDM), Butadien-Kautschuk (BR) oder Isopren-Kautschuk (IR) oder aus Mischungen der vorgenannten Werkstoffe herzustellen. Insbesondere im Zusammenhang mit den erfindungsgemäßen Schmuckpartikeln ergibt sich ein Bodenbelag mit vorteilhaften optischen und mechanischen Eigenschaften.

Es hat sich in Bezug auf die dauerhafte Einbindung der mineralischen Schmuckpartikel als vorteilhaft herausgestellt, wenn das unvulkanisierte Grundmaterial eine Mooney-Viskosität von 60 bis 160 ML (1+4/100°C), vorzugsweise von 100 bis 140 ML (1+4/100°C) aufweist. Die Mooney-Viskosität wird entsprechend DIN 53523 ermittelt. Die Angabe ML (1+4/100°C) bedeutet, dass die Viskosität mit einem Normalrotor entsprechend DIN 53523, einer Vorwärmzeit von einer Minute und einer Prüfdauer von vier Minuten bei einer Prüftemperatur der Prüfkammer von 100°C gemessen wird.

Der Bodenbelag weist eine lange Gebrauchsdauer bei gleichzeitig guter Verlegbarkeit auf, wenn die Härte des vulkanisierten Grundmaterials zwischen 75 und 96 Shore A, vorzugsweise zwischen 85 und 96 Shore A und die Reißdehnung des vulkanisierten Grundmaterials zwischen 30% und 750%, vorzugsweise zwischen 50% und 150% liegt. Hierbei hat sich herausgestellt, dass die mineralischen Partikel auch bei großer Dehnung fest in die Matrix des Grundmaterials eingebunden sind.

Bei dem erfindungsgemäßen Verfahren zur Herstellung eines Bodenbelags wie zuvor beschrieben wird zunächst das elastomere Grundmaterial bereitgestellt und in eine plattenförmige Gestalt überführt, anschließend werden mineralische Schmuckpartikel mit einer Sphärizität von kleiner oder gleich 0,65 auf die Oberfläche des Grundmaterials aufgestreut und das mit den Schmuckpartikeln versehene Grundmaterial wird zur Vulkanisation einer Vulkanisationseinrichtung zugeführt. Hierbei hat sich überraschenderweise gezeigt, dass trotz der auf den Auftrag der Schmuckpartikel auf das Grundmaterial nachgeschalteten kombinierten Wärme- und Druckbehandlung während der Vulkanisation die mineralischen Schmuckpartikel mit einer Dichte von weniger als 3 kg/dm³ zwar in die Matrix des Grundmaterials eingedrückt werden, jedoch höchstens geringfügig von dem Grundmaterial bedeckt werden und dadurch dort sowohl mechanisch als auch optisch wirksam sind. Insbesondere im Zusammenhang mit den vorgenannten gummielastischen Werkstoffen ist dies insofern überraschend, weil diese Werkstoffe während der Erhitzung unmittelbar vor der Vernetzung bei der Initiierung der Vulkanisation wenigstens kurzzeitig in eine niedrigviskose Phase übergehen. Somit wäre zu erwarten gewesen, dass auch mineralische Schmuckpartikel mit einer geringen Dichte während der Vulkanisation in die Matrix des Grundmaterials einsinken.

In einem bevorzugten Verfahren erfolgt die Vulkanisation in einem kontinuierlichen Prozess. Bei einer kontinuierlichen Vulkanisation wird das bahnenförmige Grundmaterial einer Bahnenvulkanisationsanlage zugeführt, welche eine beheizbare Walze aufweist um die ein spannbares Stahlband herumgeführt ist. Das Grundmaterial wird zwischen Stahlband und Walze in die Bahnenvulkanisationsanlage eingeführt und vulkanisiert dort während des Umlaufens um die Walze aus. Dabei wird das Grundmaterial durch das Stahlband an die Walze angedrückt und komprimiert, wobei auch die mineralischen Partikel in das Grundmaterial eingedrückt werden. Die mineralischen Partikel werden unmittelbar vor der Vulkanisation auf die Oberfläche des Grundmaterials aufgestreut.

Vor und während des Aufstreuens ist es vorteilhaft, wenn die mineralischen Schmuckpartikel elektrostatisch entladen werden. Dafür können die mineralischen Schmuckpartikel entlang einer Einrichtung zur elektrostatischen Entladung, beispielsweise Entladungsleisten, geführt werden und/oder das Grundmaterial ist in Kontakt mit einer derartigen Einrichtung. Die mineralischen Schmuckpartikel weisen eine vergleichsweise geringe Größe und Masse auf, so dass elektrostatische Effekte wirksam sind, welche dazu führen können, dass sich Partikel einander anziehen oder abstoßen. Dies wiederum kann zu einer unerwünschten ungleichmäßigen Partikelverteilung führen. Werden die mineralischen Schmuckpartikel elektrostatisch entladen, ergibt sich eine gleichmäßigere Verteilung der Schmuckpartikel auf der Oberfläche des Bodenbelags.

Im Anschluss an die Vulkanisation kann das Grundmaterial zugeschnitten werden. Dadurch kann das bahnenförmige Grundmaterial in eine Plattenform überführt werden oder seitlich zugeschnitten werden. Vor diesem Hintergrund ist die Verwendung von mineralischen Schmuckpartikeln mit einer geringen Mohshärte von weniger als 7, beispielsweise von Granit- oder Glimmerpartikeln vorteilhaft, da diese mit herkömmlichen Schneidmaschinen schneidbar sind. Harte Partikel, beispielsweise aus Korund oder Siliciumcarbid führen aufgrund der Härte zu einem vorzeitigen Verschleiß der Schneidmesser.

Einige Ausgestaltungen des erfindungsgemäßen Bodenbelags werden nachfolgend näher erläutert. Die Figuren zeigen schematisch:

Fig. 1     den Bodenbelag in der Draufsicht;
Fig. 2     das Herstellungsverfahren des Bodenbelags;
Fig. 3     eine erste Summenkurve mit der Partikelverteilung;
Fig. 4     eine weitere Summenkurve mit einer weiteren Partikelverteilung.

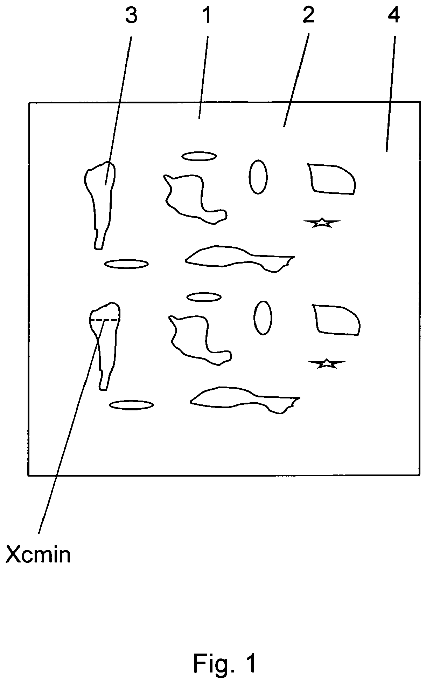

Figur 1 zeigt einen Bodenbelag 1, umfassend ein plattenförmiges Grundmaterial 2 aus elastomerem Werkstoff. In dieser Ausgestaltung beinhaltet das Grundmaterial SBR. Das Grundmaterial 2 ist mit mineralischen Schmuckpartikeln 3 aus Granit und Glimmer versehen. Dabei sind die Schmuckpartikel 3 so ausgebildet, dass die statistische Verteilung der Rundheit bei der unten angegebenen Partikelgrößenfraktion eine $x_{50}$-Sphärizität

von 0,65 in einer $Q_3$-Summenverteilung aufweist. Die aus Granit und Glimmer bestehenden und an der Oberfläche 4 des Bodenbelags 1 sichtbaren Schmuckpartikel 3 einer auf den Bodenbelag aufgetragenen Partikelfraktion weisen eine mittlere Partikelbreite zwischen 0,1 mm und 2 mm auf. Die Partikelbreite eines Partikels wird optisch bestimmt, wobei die Projektion eines Partikels erfasst wird und dessen kleinste Breits bestimmt wird. Diese kleinste Breite $x_{c\,min}$ wird zur Klassifizierung der Partikelbreite herangezogen. Die Auftragsmenge der Schmuckpartikel 3 wurde so gewählt, dass der Bedeckungsgrad der Oberfläche 4 des Bodenbelags 1 mit Schmuckpartikeln 3 größer als 2%, vorzugsweise größer als 5% ist. In dieser Ausgestaltung liegt der Bedeckungsgrad im Bereich von 2,4%. Das das Grundmaterial bildende Rohmaterial (SBR) weist eine Mooney-Viskosität von 120 ML (1+4/100°C) auf. Das Grundmaterial (SBR) weist eine Härte im Bereich von 90 bis 95 Shore A und eine Reißdehnung im Bereich von 100% bis 150% auf. Hierbei hat sich gezeigt, dass die Schmuckpartikel auch bei starker mechanischer Beanspruchung sicher in die Matrix des Grundmaterials eingebunden sind.

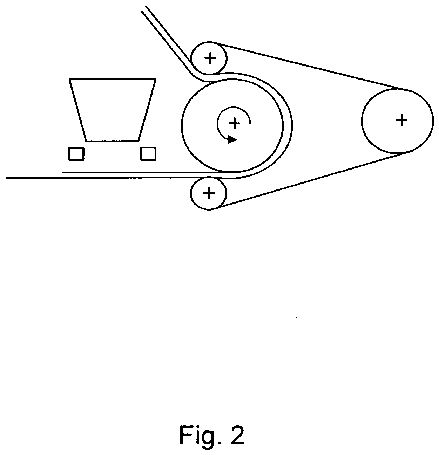

Figur 2 zeigt eine Vorrichtung zur Herstellung eines Bodenbelags. Dabei wird zunächst das Rohmaterial des Grundmaterials 2 bereitgestellt und anschließend in eine bahnenförmige Form überführt. Dazu wird das Rohmaterial, beispielsweise das Rohmaterial des SBR, in einem Kneter gemischt und die daraus entstandene Rohmasse wird einem Kalander zugeführt, dessen Walzenanordnung ein bahnenförmiges Auswalzen des Rohmaterials bewirkt. Ferner werden während des Kalandrierens eingeschlossene Luftblasen aus dem Rohmaterial ausgetrieben. Dieses das Grundmaterial 2 bildende bahnenförmige versehene Material wird zur kontinuierlichen Vulkanisation, also zu der Vernetzung des elastomeren Materials, einer Einrichtung zugeführt. Die Einrichtung kann zur kontinuierlichen oder diskontinuierlichen Vulkanisation ausgebildet sein, wobei vorliegend eine kontinuierliche Vulkanisation in einer als Bahnenvulkanisationsanlage ausgebildeten Einrichtung durchgeführt wird.

Vor der Zuführung zur Vulkanisation werden die oben genannten mineralischen Schmuckpartikel auf das Grundmaterial aufgestreut, wobei die mineralischen Partikel zwecks elektrostatischer Entladung an einer Entladungsleiste entlang geführt werden.

Zur kontinuierlichen Vulkanisation umfasst die Bahnenvulkanisationsanlage eine beheizbare Walze um die auf einem Teilkreis ein spannbares Stahlband herumgeführt ist. Das Stahlband ist auf Rollen geführt und läuft mit der beheizbare Walze um. In den Spalt zwischen Stahlband und Walze wird das Grundmaterial 2 zur Vulkanisation eingeführt, kontinuierlich um die Walze herumgeführt und anschließend entnommen. Die Bahnenvulkanisationsanlage ist derart eingerichtet, dass das Grundmaterial 2 fünf Minuten in der Anlage verbleibt, wobei die Vulkanisationstemperatur 180°C beträgt. Durch die Vulkanisation vernetzt das Material und es bilden sich die gummielastischen Eigenschaften heraus. Direkt nach dem Einführen des Grundmaterials 2 in den Spalt zwischen Walze und Stahlband werden die Schmuckpartikel in das Grundmaterial eingedrückt, wobei die Partikel derart in das Grundmaterial eingedrückt werden, dass die Projektion der Schmuckpartikel und damit deren äußere Konturen an der Oberfläche 4 des Bodenbelags 1 erkennbar bleiben. Durch die einsetzende Vulkanisation erfolgt eine form- und stoffschlüssige Einbindung der Schmuckpartikel in das Grundmaterial.

Nach dem Abkühlen wird das Grundmaterial 2 im Anschluss an die Vulkanisation plattenförmig zugeschnitten.

Sowohl die Ermittlung der Sphärizität als auch der mittleren Partikelbreite erfolgt vorzugsweise mithilfe einer automatisierten Bildanalyse. Zur Vermessung werden die schüttfähigen Partikel eine Platte aufgebracht, welche rückseitig beleuchtet ist. Eine CCD-Kamera nimmt die Partikel, welche das Licht abschatten, auf. Die durch die CCD-Kamera aufgenommenen Bilder werden anschließend einer automatisierten Auswertung zugeführt. Die Rundheit beschreibt das Verhältnis zwischen dem Flächeninhalt eines Partikelbildes und dem Umfang des Partikelbildes. Ein kugelförmiges Partikel hat eine Rundheit von 1, während sich der Wert mit zunehmender Abweichung von der runden Gestalt der Null annähert. Die Rundheit eines Partikels wird durch die folgende Formel abgebildet, wobei A die Projektionsfläche des Schmuckpartikels darstellt und U dessen Umfang:

$$R = \frac{4\pi A}{U^2}$$

Die Messung der kleinsten Breite der Schmuckpartikel 3 erfolgt ebenfalls und simultan mittels optischer Auswertung. Dabei wird vorzugsweise je Schmuckpartikel 3 der kleinste Partikeldurchmesser $x_{c\,min}$ herangezogen, da Schmuckpartikel 3 auch ein Sieb passieren, dessen Weite der kleinsten Partikelbreite entspricht. Schmuckpartikel mit einem vorgegebenen Bereich der Partikelbreite werden zusammengefasst und die Sphärizität wird auf einer $Q_3$-Summenkurve aufgetragen. Die Summenkurve gibt die normierte Menge aller Schmuckpartikel mit einer Sphärizität kleiner 1 an. Bei einer $Q_3$-Summenkurve (r=3) werden die Schmuckpartikel hinsichtlich der aus dem Volumen und dessen Oberflächengestalt gebildeten Sphärizität sortiert.

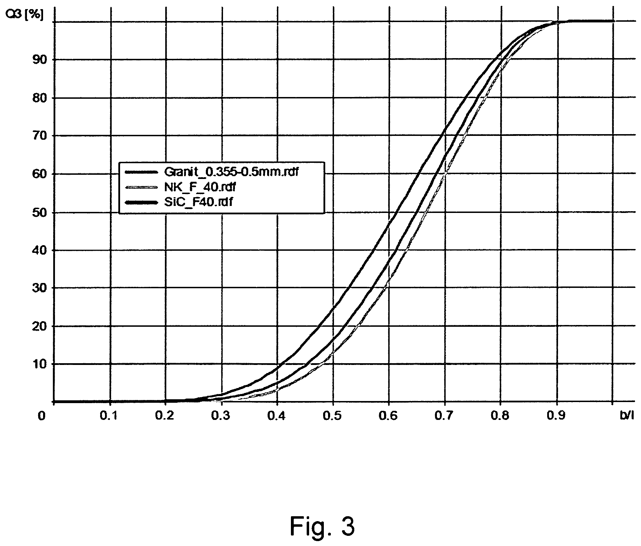

In Figur 3 ist eine erste $Q_3$-Summenkurve angegeben, auf welcher Schmuckpartikel verschiedener Materialien mit einem Partikelgrößenbereich (kleinste Breite $x_{c\,min}$) von 0,355 mm und 0,5 mm aufgetragen sind. Es werden Schmuckpartikel 3 bestehend aus Granit, Siliciumcarbid und Korund verglichen, wobei die Summenkurve betreffend die Granitpartikel links, der Ordinate am nächsten liegend angeordnet ist. Die Summenkurve betreffend die Siliciumcarbidpartikel bildet die mittlere Summenkurve und die Summenkurve betreffend die Korundpartikel bildet die rechte Summenkurve. Der beanspruchte $x_{50}$-Wert bedeutet, dass 50% der Granitpartikel in dem aufgetragenen Größenspektrum eine Sphärizität von 0,65 oder kleiner aufweisen. Sowohl Partikel aus Siliciumcarbid als auch solche aus Korund weisen einen höheren $x_{50}$-Wert auf.

Figur 3 können beispielsweise die folgenden erfindungsgemäßen Sphärizitäten entnommen werden:

| Verteilung | Granit | Korund |
|---|---|---|
| $X_{70}$ | 0,7 | 0,74 |
| $X_{60}$ | 0,65 | 0,7 |
| $X_{50}$ | 0,62 | 0,66 |
| $X_{40}$ | 0,58 | 0,63 |
| $X_{30}$ | 0,53 | 0,6 |

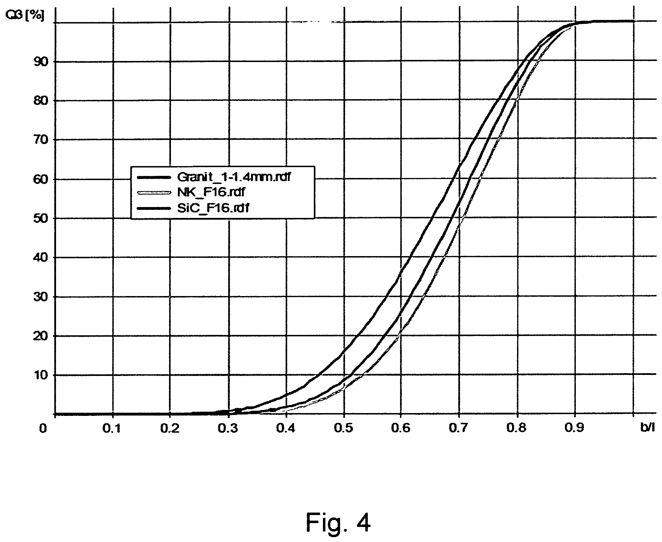

In Figur 4 ist eine weitere vergleichbare $Q_3$-Summenkurve gezeigt, wobei in dieser Summenkurve Partikel in einem Partikelgrößenbereich (kleinste Breite $x_{c\,min}$) von 1 mm bis 1,4 mm aufgetragen sind. Die Anordnung der Summenkurven der einzelnen Materialien entspricht der zuvor beschriebenen Summenkurve.

Figur 4 können beispielsweise die folgenden erfindungsgemäßen Sphärizitäten entnommen werden:

| Verteilung | Granit | Korund |
|---|---|---|
| $X_{70}$ | 0,73 | 0,77 |
| $X_{60}$ | 0,69 | 0,75 |
| $X_{50}$ | 0,65 | 0,71 |
| $X_{40}$ | 0,62 | 0,68 |
| $X_{30}$ | 0,58 | 0,65 |

Wie zuvor ausgeführt, kann die mittlere Partikelbreite auch durch eine Siebanalyse gemäß DIN 66165 ermittelt werden.

Die Messung der Sphärizität und des mittleren Partikeldurchmesser der erfindungsgemäßen Partikel erfolgte vorliegend durch ein Partikelmessgerät mit der Bezeichnung "Camsizer" der Retsch Technologie GmbH in Haan.

In der folgenden Tabelle sind mechanische Kenngrößen der erfindungsgemäßen Granit- und Glimmerpartikel und zum Vergleich mechanische Kenngrößen von Korund- und Siliciumcarbid-Partikeln aufgeführt:

| Material | Mohshärte | Dichte |
|---|---|---|
| Glimmer | 2 bis 3 | 2,76 kg/dm$^3$ |
| Granit | 6 | 2,76 kg/dm$^3$ |
| Siliciumcarbid | 9,6 | 3,22 kg/dm$^3$ |

(fortgesetzt)

| Material | Mohshärte | Dichte |
|----------|-----------|--------|
| Korund | 9 | 3,90 kg/dm$^3$ |

## Patentansprüche

1. Bodenbelag (1), umfassend ein bahn- oder plattenförmiges Grundmaterial (2) aus elastomerem Werkstoff, wobei das Grundmaterial (2) mit mineralischen Schmuckpartikeln (3) versehen ist, wobei die Dichte der mineralischen Schmuckpartikel (3) nicht größer als 3 kg/dm$^3$ ist, **dadurch gekennzeichnet, dass** die mineralischen Schmuckpartikel (3) einer Partikelfraktion mit einer Partikelbreite ($x_{c\,min}$) zwischen 0,35 mm und 1,4 mm bei einer $Q_3$-Summenvertei-lung eine $X_{50}$-Sphärizität von kleiner oder gleich 0,65 aufweisen.

2. Bodenbelag nach Anspruch 1, **dadurch gekennzeichnet, dass** die Mohshärte der mineralischen Schmuckpartikel (3) kleiner als 7 ist.

3. Bodenbelag nach einem der Ansprüche 1 oder 2, **dadurch gekennzeichnet, dass** die mineralischen Schmuckpartikel (3) Granitpartikel und/oder Glimmer umfassen.

4. Bodenbelag nach einem der Ansprüche 1 bis 3, **dadurch gekennzeichnet, dass** der Bedeckungsgrad der Oberfläche (4) des Bodenbelags (1) mit Schmuckpartikeln (3) größer als 2%, vorzugsweise größer als 5% ist.

5. Bodenbelag nach einem der Ansprüche 1 bis 4, **dadurch gekennzeichnet, dass** der mittlere Durchmesser der Schmuckpartikel (3) einer auf den Bodenbelag (1) aufgetragenen Partikelfraktion kleiner oder gleich 2 mm, vorzugsweise kleiner oder gleich 1,5 mm ist.

6. Bodenbelag nach einem der Ansprüche 1 bis 5, **dadurch gekennzeichnet, dass** das Grundmaterial (2) einen Butadien-Monomere enthaltenden Kautschuk umfasst.

7. Verfahren zur Herstellung eines Bodenbelags (1) nach einem der vorherigen Ansprüche bei dem zunächst das elastomere Grundmaterial (2) bereitgestellt und in eine bahnen- oder plattenförmige Gestalt überführt wird, anschließend werden mineralische Schmuckpartikel (3) mit einer Dichte von nicht mehr als 3 kg/dm$^3$, wobei die mineralischen Schmuckpar-tikel (3) einer Partikelfraktion mit einer Partikelbreite ($x_{c\,min}$) zwischen 0,35 mm und 1,4 mm bei einer $Q_3$-Summenverteilung eine $X_{50}$-Sphärizität von kleiner oder gleich 0,65 aufweisen auf die Oberfläche (4) des Grundmaterials (2) aufgestreut und das mit den Schmuckpartikeln (3) versehene Grundmaterial (2) wird zur Vulkanisation einer Vulkanisationseinrichtung zugeführt.

8. Verfahren nach Anspruch 7, **dadurch gekennzeichnet, dass** die Vulkanisation in einem kontinuierlichen Prozess erfolgt.

9. Verfahren nach Anspruch 7 oder 8, **dadurch ge-kennzeichnet, dass** die mineralischen Schmuck-partikel (3) und/oder das Grundmaterial (2) während des Aufstreuens der mineralischen Schmuckpartikel (3) auf das Grundmaterial (2) einer Einrichtung zur elektrostatischen Entladung zugeführt werden.

10. Verfahren nach einem der Ansprüche 7 bis 9, **dadurch gekennzeichnet, dass** das Grundmaterial (2) im Anschluss an die Vulkanisation zugeschnitten wird.

## Claims

1. Floor covering (1), comprising a web-shaped or sheet-shaped base material (2) of elastomeric material, the base material (2) being provided with decorative mineral particles (3), the density of the decorative mineral particles (3) being no greater than 3 kg/dm$^3$, **characterized in that** the decorative mineral particles (3) of a particle fraction with particle width ($x_{c\,min}$) of between 0.35 mm and 1.4 mm in a cumulative $Q_3$ distribution having an $X_{50}$ sphericity smaller than or equal to 0.65.

2. Floor covering according to claim 1, **characterized in that** the Moh hardness of the decorative mineral particles (3) is smaller than 7.

3. Floor covering according to either claim 1 or claim 2, **characterized in that** the decorative mineral particles (3) comprise granite particles and/or mica.

4. Floor covering according to any of claims 1 to 3, **characterized in that** the coverage of the surface (4) of the floor covering (1) with decorative mineral particles (3) is greater than 2 %, preferably greater than 5 %.

5. Floor covering according to any of claims 1 to 4, **characterized in that** the average diameter of the decorative mineral particles (3) of a particle fraction applied to the floor covering (1) is smaller than or equal to 2 mm, preferably smaller than or equal to 1.5 mm.

6. Floor covering according to any of claims 1 to 5, **characterized in that** the base material (2) comprises a rubber comprising butadiene monomers.

7. Method for manufacturing the floor covering (1) according to any of the preceding claims, in which initially the elastomeric base material (2) is provided and brought into a web-shaped or sheet-shaped formation, subsequently decorative mineral particles (3) having a density of not more than 3 kg/dm$^3$, the decorative mineral particles (3) of a particle fraction with particle width ($x_{c\,min}$) of between 0.35 mm and 1.4 mm in a cumulative $Q_3$ distribution having an $X_{50}$ sphericity smaller than or equal to 0.65, are scattered onto the surface (4) of the base material (2), and the base material (2) provided with the decorative mineral particles (3) is supplied to a vulcanization device for vulcanization.

8. Method according to claim 7, **characterized in that** the vulcanization takes place in a continuous process.

9. Method according to either claim 7 or claim 8, **characterized in that**, during the scattering of the decorative mineral particles (3) onto the base material (2), the decorative mineral particles (3) and/or the base material (2) are supplied to a device for electrostatic discharging.

10. Method according to any of claims 7 to 9, **characterized in that** the base material (2) is cut to size subsequent to the vulcanization.

**Revendications**

1. Revêtement de sol (1), comprenant un matériau de base (2) en forme de bande ou de panneau en matière élastomère, le matériau de base (2) étant pourvu de particules d'ornement minérales (3), la densité des particules d'ornement minérales (3) n'étant pas supérieure à 3 kg/dm$^3$, **caractérisé en ce que** les particules d'ornement minérales (3) d'une fraction de particules avec une largeur de particule ($x_{c\,min}$) comprise entre 0,35 mm et 1,4 mm présentent, pour une distribution cumulée $Q_3$, une sphéricité $X_{50}$ inférieure ou égale à 0,65.

2. Revêtement de sol selon la revendication 1, **caractérisé en ce que** la dureté Mohs des particules d'ornement minérales (3) est inférieure à 7.

3. Revêtement de sol selon l'une des revendications 1 ou 2, **caractérisé en ce que** les particules d'ornement minérales (3) comprennent des particules de granit et/ou du mica.

4. Revêtement de sol selon l'une des revendications 1 à 3, **caractérisé en ce que** le degré de recouvrement de la surface (4) du revêtement de sol (1) avec des particules d'ornement (3) est supérieur à 2 %, de préférence supérieur à 5 %.

5. Revêtement de sol selon l'une des revendications 1 à 4, **caractérisé en ce que** le diamètre moyen des particules d'ornement (3) d'une fraction de particules appliquée sur le revêtement de sol (1) est inférieur ou égal à 2 mm, de préférence inférieur ou égal à 1,5 mm.

6. Revêtement de sol selon l'une des revendications 1 à 5, **caractérisé en ce que** le matériau de base (2) comprend un caoutchouc contenant des monomères de butadiène.

7. Procédé de fabrication d'un revêtement de sol (1) selon l'une des revendications précédentes, dans lequel le matériau de base élastomère (2) est d'abord mis à disposition et transformé dans une configuration en forme de bande ou de panneau, puis des particules d'ornement minérales (3) sont répandues sur la surface (4) du matériau de base (2) avec une densité ne dépassant pas 3 kg/dm$^3$, les particules d'ornement minérales (3) d'une fraction de particules avec une largeur de particule ($x_{c\,min}$) comprise entre 0,35 mm et 1,4 mm présentant, pour une distribution cumulée $Q_3$, une sphéricité $X_{50}$ inférieure ou égale à 0,65, et le matériau de base (2) pourvu des particules d'ornement (3) est alimenté dans un moyen de vulcanisation en vue de sa vulcanisation.

8. Procédé selon la revendication 7, **caractérisé en ce que** la vulcanisation est effectuée dans un processus continu.

9. Procédé selon la revendication 7 ou 8, **caractérisé en ce que** les particules d'ornement minérales (3) et/ou le matériau de base (2) sont alimentés dans un moyen destiné à la décharge électrostatique pendant le répandage des particules d'ornement minérales (3) sur le matériau de base (2).

10. Procédé selon l'une des revendications 7 à 9, **caractérisé en ce que** le matériau de base (2) est découpé après la vulcanisation.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 10316886 A1
- EP 1045048 A2

- EP 1884607 A2
- DE 1198535